# EUROPÄISCHE PATENTSCHRIFT

(11) **EP 1 260 129 B1**
(45) Veröffentlichungstag und Bekanntmachung des Hinweises auf die Patenterteilung: **28.07.2004**
(21) Anmeldenummer: 01112240.5
(22) Anmeldetag: 18.05.2001
(51) Int. Cl.: A01B 71/06

(54) **Trägerfahrzeug mit einem zapfwellengetriebenen Anbaugerät**
Carrier vehicle with pto-driven mounted implement
Véhicule porteur avec un accessoire entrainé par prise de force

(43) Veröffentlichungstag der Anmeldung: 27.11.2002
(73) Patentinhaber: Schmidt Holding GmbH, 70794 Filderstadt-Bonlanden (DE)
(72) Erfinder: Meissner, Uwe, 79872 Bernau (DE); Haselsberger, Herbert, 6306 Söll (AT); Hirt, Max, 79804 Doggern (DE)
(74) Vertreter: Grättinger & Partner (GbR)

(56) Entgegenhaltungen:
- DE-A- 4 335 846
- DE-C- 4 314 250
- DE-U- 20 006 371

## Beschreibung

Die vorliegende Erfindung betrifft ein Trägerfahrzeug mit einem über eine Anbauvorrichtung daran angebauten zapfwellengetriebenen Anbaugerät, wobei die Anbauvorrichtung eine Hubeinrichtung umfaßt, mittels welcher das Anbaugerät relativ zum Trägerfahrzeug im wesentlichen vertikal anheb- und absenkbar ist, und wobei der Antriebsstrang von der Zapfwelle zum Anbaugerät mindestens eine Gelenkwelle umfaßt.

Namentlich auf dem Gebiet der Kommunaltechnik gibt es eine erhebliche Anzahl von Anbaugeräten, die zum Anbau an ein Trägerfahrzeug bestimmt und dazu ausgelegt sind, durch die Zapfwelle des Fahrzeuges angetrieben zu werden. Dies gilt beispielsweise für Mähgeräte, Kehrgeräte, Schneefräsen sowie Schneeschleudern und dergleichen. Regelmäßig läßt sich dabei das Anbaugerät mittels der Hubeinrichtung in eine abgesenkte Arbeitsstellung und eine angehobene Transportstellung bringen. Im Hinblick auf die Anheb- und Absenkbarkeit des Anbaugeräts relativ zum Trägerfahrzeug umfaßt der Antriebsstrang von der Zapfwelle zum Anbaugerät im allgemeinen eine ein Schiebestück und zwei Gelenke umfassende Gelenkwelle.

Bei relativ geringen Hüben der Hubeinrichtung und/oder relativ niedrigen Antriebsleistungen für das Anbaugerät ist die direkte Verbindung der Eigangswelle des Anbaugeräts mit der Zapfwelle des Trägerfahrzeugs über eine Gelenkwelle eine geeignete Lösung. Probleme ergeben sich jedoch insbesondere dann, wenn ein Anbaugerät mit einer hohen Leistungsaufnahme mittels einer Anbauvorrichtung, die einen erheblichen Hub ermöglicht, an ein Trägerfahrzeug anzubauen ist. Dies gilt beispielsweise für Frässchleudern, die eine Leistungsaufnahme von ca. 150 kW aufweisen und bei denen der maximale Hub der Anbauvorrichtung etwa 500 mm betragen soll. Zwar tritt bei modernen Gelenkwellen zwischen deren Ausgang und deren Eingang eine Drehwinkelverschiebung nicht auf, so daß bei gleichförmiger Drehung der Zapfwelle auch das Anbaugerät gleichförmig läuft. Jedoch gilt dies nicht für Zwischenglieder der Gelenkwelle wie insbesondere das Schiebestück. Dies führt bei stark dimensionierten Gelenkwellen, die für die Übertragung hoher Drehmomente ausgelegt sind, zu nicht vernachlässigbaren induzierten Drehschwingungen. Diese können innerhalb kurzer Zeit zur Beschädigung oder gar Zerstörung des Anbaugeräts, des Antriebsstranges und/oder des Zapfwellenantriebs des Trägerfahrzeugs führen. Namentlich gilt das, wenn die Gelenke der Gelenkwelle einen Winkelversatz von mehr als größenordnungsmäßig 15° ausgleichen müssen, da mit zunehmendem Winkelversatz die Auswirkungen der vorstehend beschriebenen Drehunwucht überproportional zunehmen. Zur Vermeidung von Schäden am Trägerfahrzeug schreiben Fahrzeughersteller verschiedentlich vor, unabhängig von dem Hub der Hubeinrichtung den Winkelversatz in den Gelenken von Gelenkwellenanordnungen auf dem gerade noch tolerierbaren Wert von max. 15° zu begrenzen.

Aus dieser Winkelbegrenzung ergibt sich bei einem symmetrischen Hub der Hubeinrichtung von 500 mm die Länge der Doppelgelenkwelle zu ca. 1.100 mm. Zur Anordnung einer solch langen Welle sind bislang zwei verschiedene Möglichkeiten vorgeschlagen worden. Zum einen ist bekannt, an die Zapfwelle des Trägerfahrzeugs ein Höhenverlagerungsgetriebe anzuschließen, dessen Ausgang unterhalb des Eingangs liegt und nach hinten weist. Unter dem Fahrzeug wird dann eine an den Ausgang des Höhenverlagerungsgetriebes angeschlossene Zwischenwelle so weit nach hinten geführt, daß eine einerseits über ein weiteres Getriebe an die Zwischenwelle und andererseits an das Anbaugerät angeschlossene Gelenkwelle eine Länge von 1,1 m aufweist. Das Problem bei dieser Konzeption ist, daß nicht bei allen Fahrzeugen der erforderliche Einbauraum für die Zwischenwelle, das Zwischengetriebe und die Gelenkwelle frontseitig unterhalb des Fahrzeugs zur Verfügung steht. Vor diesem Hintergrund wurde eine weitere Lösung entwickelt, bei der eine etwa 1,1 m lange Gelenkwelle über das Anbaugerät nach vorne geführt wird. Das vordere Ende der Gelenkwelle steht mit einem Zwischengetriebe in Verbindung, das seinerseits über eine Zwischenwelle und ggf. eine mehrfache Umlenkung das Anbaugerät antreibt. Auch diese Konzeption ist mit einem ganz erheblichen baulichen Aufwand verbunden. Zudem ist bei verschiedenen Anbaugeräten die Lage der Gelenkwelle oberhalb des Anbaugeräts störend. Zusätzlich sind die Getriebe zwangsläufig mit großem Abstand zur Vorderachse angeordnet, was die Schwerpunktlage ungünstig beeinflußt.

Eine direkte Verbindung des Anbaugeräts mit der Zapfwelle über eine 1,1 m lange Gelenkwelle kommt in aller Regel deshalb nicht in Betracht, weil sich hierdurch nicht tolerierbare Vorbaumaße ergeben würden, die sich durch die resultierende Schwerpunktlage insbesondere auch im Hinblick auf die Fahreigenschaften des Trägerfahrzeugs negativ auswirken.

Vor dem Hintergrund des vorstehend dargelegten Standes der Technik liegt der vorliegenden Erfindung die Aufgabe zugrunde, ein Trägerfahrzeug mit einem daran angebauten Anbaugerät der eingangs angegebenen Art zu schaffen, bei dem das Anbaugerät bei geringen Beugewinkeln der Gelenke der mindestens einer Gelenkwelle dicht an dem Trägerfahrzeug anbaubar ist, ohne daß die Gelenkwelle über das Anbaugerät vorsteht oder maßgeblich unter der Frontseite des Trägerfahrzeugs verläuft.

Gelöst wird diese Aufgabenstellung bei einem Trägerfahrzeug der gattungsgemäßen Art gemäß der vorliegenden Erfindung durch die folgenden Merkmale:
- Der Antriebsstrang umfaßt ein Seitenverlagerungsgetriebe, dessen Eingang mit der Zapfwelle und dessen Ausgang mit der Eingangswelle des Anbaugeräts in Verbindung steht;
- das Seitenverlagerungsgetriebe ist um eine im wesentlichen horizontale Achse drehbar gelagert;
- das Seitenverlagerungsgetriebe ist mittels einer Kopplungseinrichtung dergestalt mit der Hubeinrichtung gekoppelt, daß der Höhenunterschied zwischen dem Ausgang und dem Eingang des Seitenverlagerungsgetriebes mit einer Untersetzung dem durch die Hubbeinrichtung bereitgestellten Hub des Anbaugeräts folgt.

Zentrales Merkmal der vorliegenden Erfindung ist somit ein in den Antriebsstrang zwischen der Zapfwelle und dem Anbaugerät angeordnetes, um eine im wesentlichen horizontale Achse schwenkbar gelagertes Seitenverlagerungsgetriebe, das seine Stellung (Neigung) gekoppelt an die Höhenstellung des Anbaugeräts ändert, wobei allerdings der Höhenunterschied zwischen dem Ausgang und dem Eingang des Seitenverlagerungsgetriebes in den verschiedenen Stellungen des Anbaugeräts über die erfindungsgemäß vorgesehene Untersetzung nur einem Teil (z.B. 50%) des den betreffenden Stellungen des Anbaugeräts zugeordneten Hubes entspricht.

Indem das drehbar gelagerte Seitenverlagerungsgetriebe durch seine Koppelung an die Hubeinrichtung dem Hub des Anbaugeräts - im Zuge der Untersetzung teilweise - durch entsprechende Veränderung des Höhenunterschieds zwischen dem Ausgang und dem Eingang folgt, bedarf es in Anwendung der vorliegenden Erfindung nur einer entsprechend kürzeren Gelenkwelle, ohne daß dies zu unzulässig hohen Beugewinkeln führen würde. Beträgt beispielsweise das durch die Untersetzung bedingte Verhältnis zwischen dem Hub der Hubeinrichtung und der zugeordneten Änderung der Höhenlage des Ausgangs und des Eingangs des Seitenverlagerungsgetriebes zueinander 3:2, so können Beugewinkel der Gelenke der mindestens einen Gelenkwelle von etwa 15° auch bei einer Länge der Gelenkwelle von ca. 570 mm eingehalten werden. Dies verschafft die Möglichkeit, das Anbaugerät besonders nahe an das Trägerfahrzeug anzubauen. Zudem läßt sich die vorliegende Erfindung auch im Zusammenhang mit sämtlichen Trägerfahrzeugen und sämtlichen Anbaugeräten realisieren, da eine störende überlange Gelenkwelle weder im Bereich des Fahrzeugs noch im Bereich des Anbaugeräts unterzubringen ist.

Lediglich zur Klarstellung sei darauf hingewiesen, daß im Rahmen der vorliegenden Erfindung nicht nur eine direkte, sondern auch eine indirekte Kopplung des Seitenverlagerungsgetriebes mit der Hubeinrichtung in Betracht kommt. Des weiteren sei klargestellt, daß der Eingang und der Ausgang des Seitenverlagerungsgetriebes keineswegs zwingend direkt mit der Zapfwelle bzw. der Eingangswelle des Anbaugeräts verbunden sein müssen, sondern daß vielmehr in den Antriebsstrang für das Anbaugerät auch weitere Zwischenelemente integriert sein können, so daß sich eine indirekte Verbindung der Zapfwelle bzw. der Eingangswelle des Anbaugeräts mit dem Eingang bzw. dem Ausgang des Seitenverlagerungsgetriebes ergibt. Beide Aspekte werden weiter unten näher erläutert.

Eine erste bevorzugte Weiterbildung der Erfindung zeichnet sich dadurch aus, daß die Anbauvorrichtung eine Parallellenkeranordnung umfaßt, wobei die Kopplungseinrichtung an einen der Lenker angeschlossen ist. In diesem Falle läßt sich die erfindungsgemäß vorgesehene Untersetzung des Hubs der Hubeinrichtung auf die entsprechend reduzierte Veränderung der Neigung des Seitenverlagerungsgetriebes mit einfachsten Mitteln realisieren. Andere technisch-konstruktive Ausgestaltungen der Kopplungsgeinrichtung zur Realisierung jener Untersetzung sind in entsprechender Weise denkbar. In diesem Zusammenhang sei darauf hingewiesen, daß es keineswegs zwingend ist, die Kopplungseinrichtung mechanisch auszuführen. Vielmehr kommt beispielsweise auch eine hydraulisch ausgeführte Kopplungseinrichtung in Betracht, wenn aus Gründen des konstruktiven Aufbaus der Anbauvorrichtung eine mechanische Kopplung mit dem angestrebten Untersetzungsverhältnis nur schwer oder gar nicht realisierbar ist.

Gemäß einer anderen bevorzugten Weiterbildung der Erfindung ist vorgesehen, daß das Seitenverlagerungsgetriebe um die Achse seiner Eingangswelle schwenkbar gelagert ist. Dies gilt namentlich dann, wenn das Seitenverlagerungsgetriebe an einem fahrzeugseitigen Teil der Anbauvorrichtung gelagert ist, so daß die Achse, um welche das Seitenverlagerungsgetriebe schwenkbar ist, bezogen auf das Trägerfahrzeug seine Lage nicht ändert. Ist hingegen das Seitenverlagerungsgetriebe an einem geräteseitigen Teil der Anbauvorrichtung gelagert, so daß die Lage seiner Schwenkachse sich entsprechend dem Hub der Anbauvorrichtung ändert, so ist das Seitenverlagerungsgetriebe zweckmäßigerweise um die Achse seiner Ausgangswelle herum schwenkbar gelagert. Bei Vorliegen entsprechender Einbauverhältnisse kommt allerdings auch eine schwenkbare Lagerung des Seitenverlagerungsgetriebes dergestalt in Betracht, daß die Schwenkachse irgendwo zwischen den Achsen der Eingangswelle und der Ausgangswelle verläuft.

Eine für verschiedene Anwendungsfälle der vorliegenden Erfindung besonders günstige Weiterbildung sieht vor, daß das Seitenverlagerungsgetriebe Teil eines Scherengetriebes ist, welches neben dem Seitenverlagerungsgetriebe ein Höhenverlagerungsgetriebe umfaßt. Dabei ist zweckmäßigerweise das Höhenverlagerungsgetriebe im Antriebsstrang zwischen der Zapfwelle und dem Seitenverlagerungsgetriebe angeordnet und fest an einem fahrzeugseitigen Teil der Anbauvorrichtung montiert. Eine Zwischenwelle, die zugleich die Ausgangswelle des Höhenverlagerungsgetriebes und die Eingangswelle des Seitenverlagerungsgetriebes bildet, definiert dabei zugleich die Schwenkachse des Seitenverlagerungsgetriebes. Diese Weiterbildung der Erfindung gestattet, das Seitenverlagerungsgetriebe besonders nahe an dem Trägerfahrzeug anzuordnen, was unter Gesichtspunkten der Gewichtsverteilung besonders günstig ist. In diesem Zusammenhang ist zu bedenken, daß die nahe Anordnung des Seitenverlagerungsgetriebes neben der unmittelbaren Auswirkung der günstigen Gewichtsverteilung auch die mittelbare Auswirkung hat, daß das Anbaugerät näher an dem Trägerfahrzeug angebaut werden kann, ohne daß dies zu einem unzulässig hohen Beugungswinkel der Gelenke der mindestens einen Gelenkwelle führen würde. Besonders gut eignet sich diese Weiterbildung der Erfindung zudem zum Antrieb von Frässchleudern und vergleichbaren Anbaugeräten, die sich durch eine vergleichsweise niedrige Anordnung der Eingangswelle auszeichnen.

Beim Einsatz von Anbaugeräten der hier in Rede stehenden Art (z.B. Frässchleudern) wird häufig die Hubeinrichtung der Anbauvorrichtung in Schwimmstellung geschaltet, so daß das Anbaugerät Fahrbahnunebenheiten folgen kann. In diesem Falle kann gemäß einer weiteren bevorzugten Weiterbildung der Erfindung eine mechanisch ausgeführte Kopplungseinrichtung dergestalt an das Seitenverlagerungsgetriebe angeschlossen sein, daß sie als Drehmomentstütze wirkend einen Teil der Last des Anbaugeräts aufnimmt. Bei dieser Konstruktion läßt sich die Auflagekraft des Anbaugeräts auf der Fahrbahn- oder sonstigen Oberfläche gegenüber der Last des Anbaugeräts gezielt verringern, so daß weitere Entlastungseinrichtungen ggf. überflüssig werden. Bei besonders leichten Anbaugeräten kann im Sinne einer kinematischen Umkehr die als Drehmomentstütze wirkende Kopplungseinrichtung bei in Schwimmstellung geschalteter Hubeinrichtung die Last des Anbaugeräts im Sinne einer Vergrößerung der Auflagekraft auf der Fahrbahn- oder sonstigen Oberfläche verstärken.

Im folgenden wird die vorliegende Erfindung anhand zweier in der Zeichnung veranschaulichter bevorzugter Ausführungsbeispiele näher erläutert. Dabei zeigt
- Fig. 1: eine erste Ausführungsform einer nach der vorliegenden Erfindung ausgeführten Anbauvorrichtung mit einem Antriebsstrang in perspektivischer Ansicht, wobei die geräteseitige Anbauplatte in ihre niedrigste Stellung abgesenkt ist,
- Fig. 2: die Anbauvorrichtung und den Antriebsstrang gemäß Fig. 1 in Seitenansicht,
- Fig. 3: die Anbauvorrichtung und den Antriebsstrang gemäß den Figuren 1 und 2, wobei die geräteseitige Anbauplatte ihre maximal angehobene Stellung einnimmt, in perspektivischer Ansicht,
- Fig. 4: die Anbauvorrichtung und den Antriebsstrang gemäß Fig. 3 in Seitenansicht und
- Fig. 5: eine zweite Ausführungsform einer nach der vorliegenden Erfindung ausgeführten Anbauvorrichtung mit einem Antriebsstrang in perspektivischer Ansicht, wobei die geräteseitige Anbauplatte in ihre niedrigste Stellung abgesenkt ist.

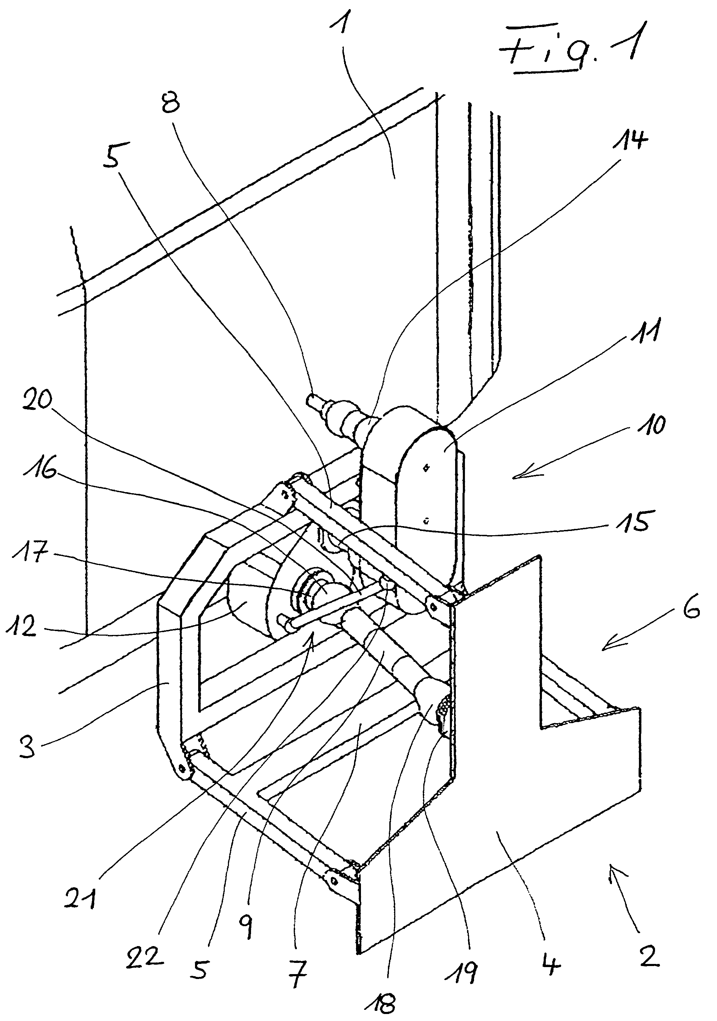

Zur Montage eines - nicht dargestellten - Anbaugeräts an einem - schematisch dargestellten - Trägerfahrzeug 1 dient die in den Fig. 1 bis 4 veranschaulichte Anbauvorrichtung 2. Diese umfaßt einen Fahrzeugseitigen Anbaurahmen 3, eine geräteseitige Anbauplatte 4 und eine drei Parallellenker 5 umfassende Lenkeranordnung 6. Die beiden unteren Lenker 5 sind dabei mittels einer Traverse 7 miteinander gekoppelt. In als solches bekannter Weise sind die drei Lenker 5 im Bereich ihrer Enden einerseits mit dem Anbaurahmen 3 und andererseits mit der Anbauplatte 4 gelenkig verbunden, so daß die Anbauplatte 4 relativ zum Anbaurahmen 3 in vertikaler Richtung angehoben und abgesenkt werden kann. Dem Anheben und Absenken der Anbauplatte 4 dient dabei eine - nicht dargestellte - Hubeinrichtung, die in als solches bekannter Weise als hydraulischer Hubzylinder ausgeführt ist.

Der Antriebsstrang, welcher dem Antrieb eines an der Anbauplatte 4 montierten zapfwellengetriebenen Anbaugeräts von der Zapfwelle 8 des Trägerfahrzeugs 1 dient, umfaßt eine Doppelgelenkwelle 9 und ein Scherengetriebe 10. Das Scherengetriebe 10 umfaßt seinerseits ein Höhenverlagerungsgetriebe 11 und ein Seitenverlagerungsgetriebe 12. Das Höhenverlagerungsgetriebe 11 ist fest mit dem Anbaurahmen 3 verbunden. Seine Eingangswelle 13 ist mittels einer Kupplung 14 mit der Zapfwelle 8 des Trägerfahrzeugs 1 verbunden.

Der Ausgang des Höhenverlagerungsgetriebes 11 ist mit dem Eingang des Seitenverlagerungsgetriebes 12 über eine Zwischenwelle verbunden. Diese Zwischenwelle verläuft im Inneren eines Drehgelenks 15, mittels welchem das Seitenverlagerungsgetriebe 12 um die Achse der genannten Zwischenwelle herum schwenkbar mit dem Höhenverlagerungsgetriebe 11 verbunden ist. Die Gelenkwelle 9 ist über das Kardangelenk 16 an den Ausgang 17 des Seitenverlagerungsgetriebes 12 angeschlossen. Das gegenüberliegende Ende der Gelenkwelle 9 ist mittels des Kardangelenks 18 mit der Eingangswelle 19 des Anbaugeräts verbunden.

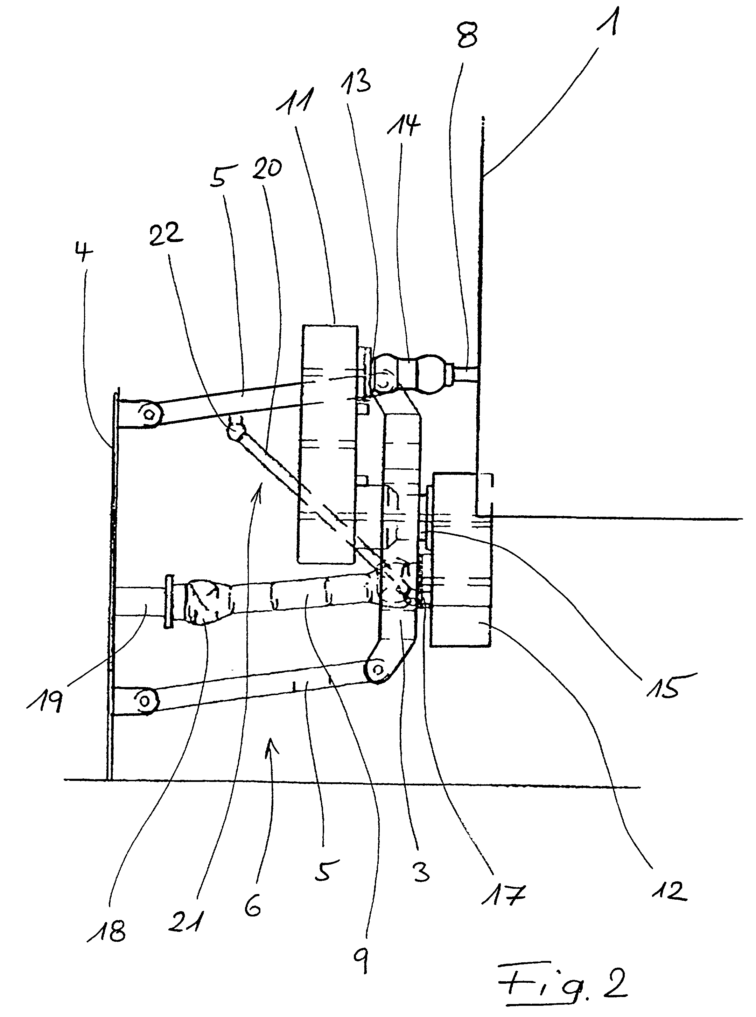

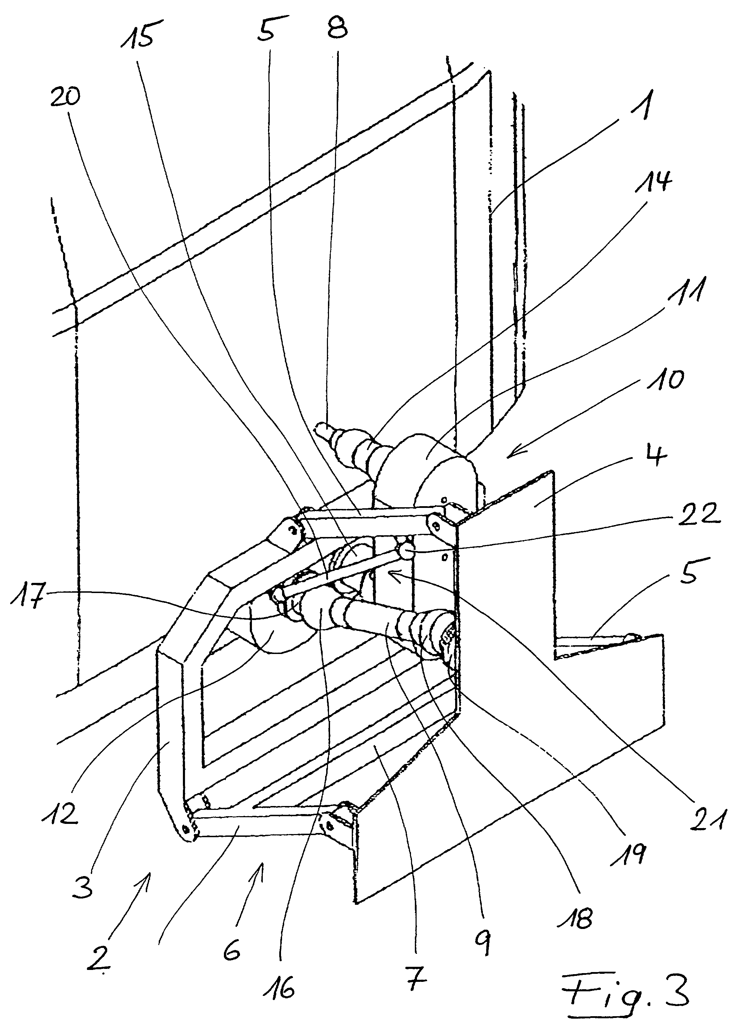

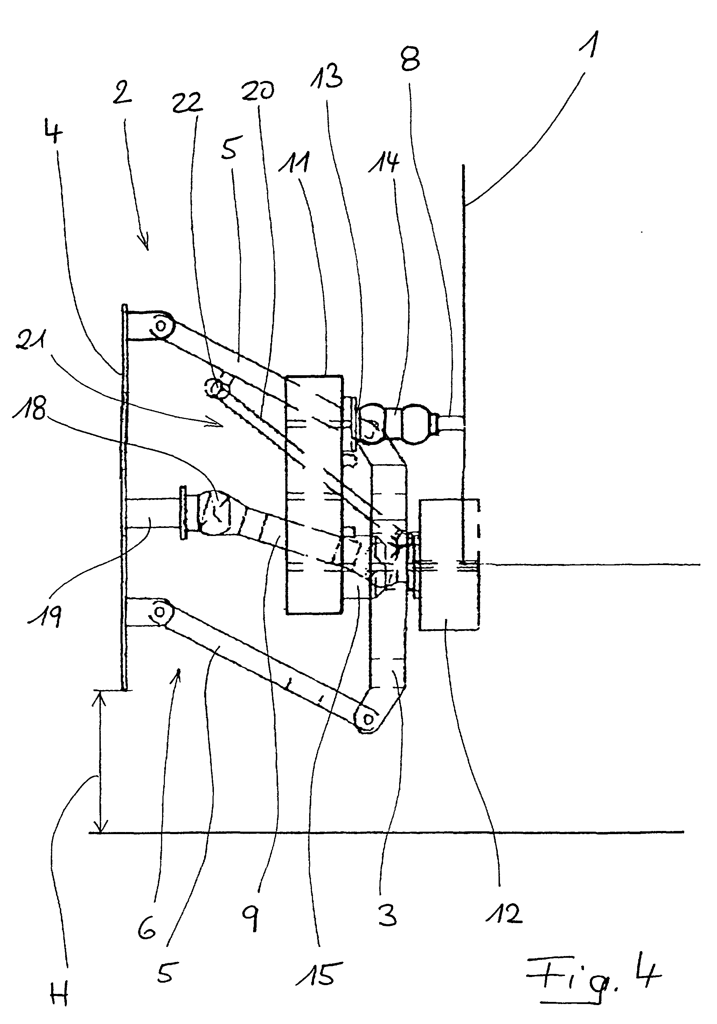

Das Seitenverlagerungsgetriebe 12 ist mittels einer durch die Koppelstange 20 gebildeten Kopplungseinrichtung 21 an die Lenkeranordnung 6 angeschlossen. Die Koppelstange 20 ist dabei einerseits mit dem oberen der drei Lenker 5 und andererseits mit dem Gehäuse des Seitenverlagerungsgetriebes 12 über jeweils ein Kugelgelenk 22 verbunden. Die Anlenkungspunkte der Koppelstange 20 an dem betreffenden Lenker 5 einerseits und dem Seitenverlagerungsgetriebe 12 andererseits sind dabei so gewählt, daß die Höhenverlagerung des Ausgangs 17 des Seitenverlagerungsgetriebes 12 etwa 50% des zugeordneten Hubes der Anbauplatte 4 beträgt. Bei einem Gesamthub H der Anbauplatte 4 von 500 mm verändert sich die Höhenlage des Ausgangs 17 des Seitenverlagerungsgetriebes 12 auf diese Weise zwischen der in den Figuren 1 und 2 dargestellten abgesenkten Stellung der Anbauplatte 4 und deren in den Figuren 3 und 4 dargestellten angehobenen Stellung um 250 mm. Auch bei einer wirksamen Länge der Gelenkwelle 9 von 650 mm überschreiten auf diese Weise die Beugewinkel in den Kardangelenken 16 und 18 nicht den kritischen Wert von 15°.

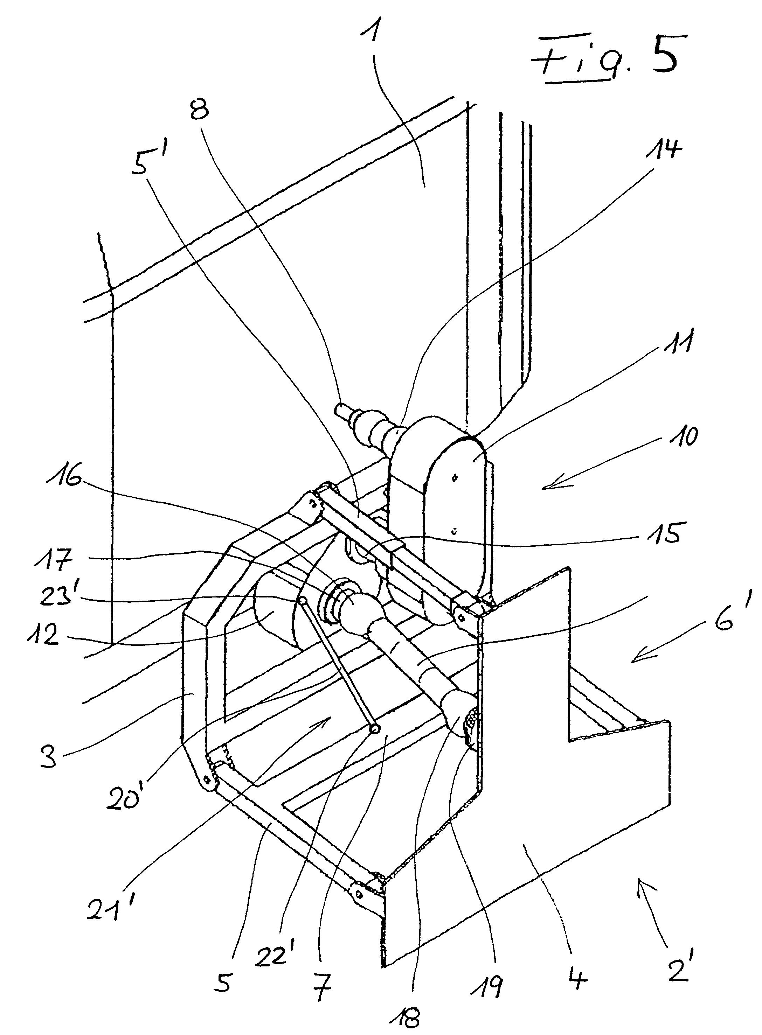

Fig. 5 zeigt eine Abwandlung der in den Figuren 1 bis 4 veranschaulichten Anbauvorrichtung in einer Figur 1 entsprechenden Darstellung. Die maßgeblichen Komponenten der Anbauvorrichtung 2' gemäß Fig. 5 stimmen dabei mit den entsprechenden Komponenten der in den Figuren 1 bis 4 veranschaulichten Anbauvorrichtung 2 überein. Sie sind daher mit dem gleichen Bezugszeichen gekennzeichnet. Mit Ausnahme der nachstehend erläuterten Abweichungen gelten somit für die Anbauvorrichtung 2' gemäß Figur 5 die vorstehenden Erläuterungen der Anbauvorrichtung 2 gemäß den Figuren 1 bis 4.

Der obere Lenker 5' der Lenkeranordnung 6' ist, um die Neigung der Anbauplatte 4 relativ zur Fahrbahnoberfläche verändern zu können, teleskopisch verlängerbar bzw. verkürzbar. Vor diesem Hintergrund ist die als Kopplungseinrichtung 21' vorgesehene Koppelstange 20' nicht mit dem oberen Lenker 5' verbunden, sondern vielmehr über das Kugelgelenk 22' mit der die beiden unteren Lenker 5 der Lenkeranordnung 6' verbindenden Traverse 7. Das gegenüberliegende Ende der Koppelstange 20' ist über das Kugelgelenk 23' am Gehäuse des Seitenverlagerungsgetriebes 12 angelenkt.

## Patentansprüche

1. Trägerfahrzeug (1) mit einem über eine Anbauvorrichtung (2, 2') daran angebauten zapfwellengetriebenen Anbaugerät, wobei die Anbauvorrichtung eine Hubeinrichtung umfaßt, mittels welcher das Anbaugerät relativ zum Trägerfahrzeug (1) im wesentlichen vertikal anheb- und absenkbar ist, und wobei der Antriebsstrang von der Zapfwelle (8) zum Anbaugerät mindestens eine Gelenkwelle (9) umfaßt, mit den folgenden Merkmalen:
- Der Antriebsstrang umfaßt ein Seitenverlagerungsgetriebe (12), dessen Eingang mit der Zapfwelle (8) und dessen Ausgang (17) mit der Eingangswelle (19) des Anbaugeräts in Verbindung steht;
- das Seitenverlagerungsgetriebe (12) ist um eine im wesentlichen horizontale Achse drehbar gelagert;
- das Seitenverlagerungsgetriebe (12) ist mittels einer Kopplungseinrichtung (21, 2') dergestalt mit der Hubeinrichtung gekoppelt, daß der Höhenunterschied zwischen dem Ausgang (17) und dem Eingang des Seitenverlagerungsgetriebes (12) mit einer Untersetzung dem durch die Hubeinrichtung bereitgestellten Hub (H) des Anbaugeräts folgt.

2. Trägerfahrzeug mit Anbaugerät nach Anspruch 1,
**dadurch gekennzeichnet,**
**daß** die Anbauvorrichtung (2, 2') eine Parallellenkeranordnung (6, 6') umfaßt, wobei die Kopplungseinrichtung (21) an einen der Lenker (5, 5') angeschlossen ist.

3. Trägerfahrzeug mit Anbaugerät nach Anspruch 1 oder Anspruch 2;
**dadurch gekennzeichnet,**
**daß** das Seitenverlagerungsgetriebe (12) um die Achse seiner Eingangswelle oder seiner Ausgangswelle schwenkbar gelagert ist.

4. Trägerfahrzeug mit Anbaugerät nach einem der Ansprüche 1 bis 3,
**dadurch gekennzeichnet**,
da**ß** das Seitenverlagerungsgetriebe (12) Teil eines Scherengetriebes (10) ist, welches neben dem Seitenverlagerungsgetriebe (12) ein Höhenverlagerungsgetriebe (11) umfaßt.

5. Trägerfahrzeug mit Anbaugerät nach Anspruch 4,
**dadurch gekennzeichnet**,
da**ß** das Höhenverlagerungsgetriebe (11) in dem Antriebsstrang zwischen der Zapfwelle (8) und dem Seitenverlagerungsgetriebe (12) angeordnet ist.

6. Trägerfahrzeug mit Anbaugerät nach Anspruch 4 oder Anspruch 5,
**dadurch gekennzeichnet**,
da**ß** das Höhenverlagerungsgetriebe (11) an einem fahrzeugseitigen Anbaurahmen (3) der Anbauvorrichtung (2, 2') relativ zum Trägerfahrzeug (1) ortsfest montiert ist.

7. Trägerfahrzeug mit Anbaugerät nach einem der Ansprüche 5 oder 6,
**dadurch gekennzeichnet**,
da**ß** das Höhenverlagerungsgetriebe (11) innerhalb des von der Ausbauvorrichtung (2, 2') umschlossenen Raumes untergebracht ist.

8. Trägerfahrzeug mit Anbaugerät nach einem der Ansprüche 4 bis 7,
**dadurch gekennzeichnet**,
da**ß** das Seitenverlagerungsgetriebe (12) in Fahrtrichtung hinter dem Höhenverlagerungsgetriebe (11) anageordnet ist.

9. Trägerfahrzeug mit Anbaugerät nach einem der Ansprüche 1 bis 8,
**dadurch gekennzeichnet**,
da**ß** der Ausgang (17) des Seitenverlagerungsgetriebes (12) mittels einer Gelenkwelle (9) mit der Eingangswelle (19) des Anbaugeräts verbunden ist.

10. Trägerfahrzeug mit Anbaugerät nach einem der Ansprüche 1 bis 9,
**dadurch gekennzeichnet**,
da**ß** die Kopplungseinrichtung (21, 21') dergestalt an das Seitenverlagerungsgetriebe (12) angeschlossen ist, daß sie als Drehmomentstütze wirkend bei in Schwimmstellung geschalteter Hubeinrichtung einen Teil der Last des Anbaugeräts aufnimmt.

11. Trägerfahrzeug mit Anbaugerät nach einem der Ansprüche 1 bis 10,
**dadurch gekennzeichnet**,
da**ß** das Seitenverlagerungsgetriebe (12) innerhalb des von der Anbauvorrichtung (2, 2') umschlossenen Raumes untergebracht ist.

## Claims

1. Carrier vehicle (1) comprising a pto-driven mounted implement attached via a mounting device (2, 2'), whereby the mounting device comprises a lifting facility, by means of which the mounted implement can be lifted and lowered essentially vertically relative to the carrier vehicle (1), and whereby the power train from the pto-shaft (8) to the mounted implement comprises at least one articulated shaft (9), with the following characteristics:
- The power train comprises a lateral adjustment gear (12) the input of which is connected with the pto-shaft (8) and the output (17) of which is connected with the input shaft (19) of the mounted implement;
- the lateral adjustment gear (12) is pivotably mounted about an essentially horizontal axis;
- the lateral adjustment gear (12) is coupled with the lifting facility by means of a coupling facility (21, 2') in such a way that the difference in height between the output (17) and the input of the lateral adjustment gear (12) follows the lift (H) of the mounted implement provided by the lifting facility, using step-down gearing.

2. Carrier vehicle with mounted implement according to claim 1,
**characterised in that** the mounting device (2, 2') comprises a parallel anchor arrangement (6, 6'), whereby the coupling facility (21) is connected to one of the connecting rods (5, 5').

3. Carrier vehicle with mounted implement according to claim 1 or 2,
**characterised in that** the lateral adjustment gear (12) is pivotably mounted about the axis of its input shaft or its output shaft.

4. Carrier vehicle with mounted implement according to one of claims 1 to 3,
**characterised in that** the lateral adjustment gear (12) is part of a scissor gear (10) which, apart from the lateral adjustment gear (12), comprises a height adjustment gear (11).

5. Carrier vehicle with mounted implement according to claim 4,
**characterised in that** the height adjustment gear (11) is arranged within the power train between the pto-shaft (8) and the lateral adjustment gear (12).

6. Carrier vehicle with mounted implement according to claim 4 or 5,
**characterised in that** the height adjustment gear (11) is fixedly attached to a vehicle-side mounting frame (3) of the mounting device (2, 2') relative to the carrier vehicle (1).

7. Carrier vehicle with mounted implement according to one of claims 5 or 6,
**characterised in that** the height adjustment gear (11) is housed within the space enclosed by the mounting device (2, 2').

8. Carrier vehicle with mounted implement according to one of claims 4 to 7,
**characterised in that** the lateral adjustment gear (12) is arranged behind the height adjustment gear (11) in the direction of travel.

9. Carrier vehicle with mounted implement according to one of claims 1 to 8,
**characterised in that** the output (17) of the lateral adjustment gear (12) is connected to the input shaft (19) of the mounted implement by means of an articulated shaft (9).

10. Carrier vehicle with mounted implement according to one of claims 1 to 9,
**characterised in that** the coupling facility (21, 21') is connected to the lateral adjustment gear (12) in such a way that it absorbs part of the load of the mounted implement, when the lifting facility is switched to the floating position, thus acting as a torque support.

11. Carrier vehicle with mounted implement according to one of claims 1 to 10,
**characterised in that** the lateral adjustment gear (12) is housed within the space enclosed by the mounting device (2, 2').

## Revendications

1. Véhicule porteur (1) avec un accessoire entraîné par une prise de force par l'intermédiaire d'un dispositif auxiliaire monté en saillie sur le véhicule et qui comprend un dispositif de levage par lequel l'accessoire peut être élevé ou abaissé essentiellement verticalement par rapport au véhicule porteur (1), la ligne d'entraînement reliant la prise de force (8) à l'accessoire comprenant au moins un arbre articulé, le dispositif présentant les caractéristiques suivantes :
- la ligne d'entraînement comprend une transmission à déplacement latéral (12) dont l'entrée est reliée à la prise de force (8) et la sortie (17) à l'arbre d'entrée (19) de l'accessoire ;
- la transmission à déplacement latéral (12) est montée en rotation autour d'un axe essentiellement horizontal ;
- la transmission à déplacement latéral (12) est accouplée au dispositif de levage par l'intermédiaire d'un dispositif de couplage (21, 21'), de manière que la différence de niveau entre la sortie (17) et l'entrée de la transmission à déplacement latéral (12) suit, avec réduction, la course de levage (H) de l'accessoire offerte par le dispositif de levage.

2. Véhicule porteur selon la revendication 1, **caractérisé en ce que** le dispositif en saillie (2, 2') comprend un système de bielles parallèles (6, 6'), le dispositif de couplage (21) étant raccordé à une des bielles (5, 5').

3. Véhicule porteur avec accessoire selon la revendication 1 ou 2, **caractérisé en ce que** la transmission à déplacement latéral (12) est montée basculante autour de l'axe de son arbre d'entrée ou de son arbre de sortie.

4. Véhicule porteur avec accessoire selon une des revendications 1 à 3, **caractérisé en ce que** la transmission à déplacement latéral (12) est une partie d'une transmission articulée en ciseaux (10), qui comprend en plus de la transmission (12) une transmission à déplacement en hauteur (11).

5. Véhicule porteur avec accessoire selon la revendication 4, **caractérisé en ce que** la transmission à déplacement en hauteur (11) est montée dans la ligne d'entraînement entre la prise de force (8) et la transmission à déplacement latéral (12).

6. Véhicule porteur avec accessoire selon la revendication 4 ou 5, **caractérisé en ce que** la transmission à déplacement en hauteur (11) est montée en position fixe par rapport au véhicule (1) sur un cadre (3) appartenant au dispositif auxiliaire (2, 2') et situé du côté du véhicule.

7. Véhicule porteur avec accessoire selon la revendication 5 ou 6, **caractérisé en ce que** le dispositif de déplacement en hauteur (11) est situé à l'intérieur du volume enveloppé par le dispositif auxiliaire (2, 2').

8. Véhicule porteur avec accessoire selon une des revendications 4 à 7, **caractérisé en ce que** la transmission à déplacement latéral (12) est montée, par rapport au sens de déplacement du véhicule, en arrière de la transmission à déplacement en hauteur (11).

9. Véhicule porteur avec accessoire selon une des revendications 1 à 8, **caractérisé en ce que** la sortie (17) de la transmission à déplacement latéral (12) est reliée par un arbre articulé (9) à l'arbre d'entrée (19) de l'accessoire.

10. Véhicule porteur avec accessoire selon une des revendications 1 à 9, **caractérisé en ce que** le dispositif d'accouplement (21, 21') est raccordé à la transmission à déplacement latéral (12), de manière qu'il supporte une partie de la charge de l'accessoire en intervenant comme soutien du couple quand le dispositif de levage travaille en position de flottement.

11. Véhicule porteur avec accessoire selon une des revendications 1 à 10, **caractérisé en ce que** la transmission à déplacement latéral (12) est montée à l'intérieur du volume entourée par le dispositif auxiliaire (2, 2').
